# EUROPÄISCHE PATENTSCHRIFT

(11) **EP 2 164 032 B1**
(45) Veröffentlichungstag und Bekanntmachung des Hinweises auf die Patenterteilung: **18.07.2018**
(21) Anmeldenummer: 08016175.5
(22) Anmeldetag: 15.09.2008
(51) Int. Cl.: H01Q 1/22, G06K 19/077

(54) **Manipulationssichere RFID-Antenne mit Sicherheitsmerkmal**
Manipulation-proof RFID antenna with safety feature
Antenne RFID protégée contre la manipulation dotée d'une caractéristique de sécurité

(43) Veröffentlichungstag der Anmeldung: 17.03.2010
(73) Patentinhaber: Hueck Folien Ges.m.b.H., 4342 Baumgartenberg (AT)
(72) Erfinder: Bergsmann, Martin, 4020 Lint (AT); Brandstetter, Gottfried, 4360 Grein (AT); Käferböck, Helmut, 4320 Perg (AT)
(74) Vertreter: Landgraf, Elvira

(56) Entgegenhaltungen:
- EP-A- 1 179 811
- EP-A- 1 959 377
- US-A- 6 164 548
- US-B1- 6 618 024
- DATABASE WPI Week 200541 Thomson Scientific, London, GB; AN 2005-401063 XP002523119 & KR 2005 011 832 A (BURIM CHEM CO LTD) 31. Januar 2005 (2005-01-31)

## Beschreibung

Die Erfindung betrifft eine manipulationssichere RFID- Antenne, die ein Sicherheitsmerkmal aufweist.

Es ist bekannt, insbesondere in mehrschichtigen Aufbauten zum Manipulationsnachweis, eine Zwischenschicht vorzusehen, die eine partiell unterschiedliche Haftung zum Untergrund aufweist. Diese Zwischenschicht wird mit einer haftenden Schicht versehen und auf den Träger aufgebracht. Versucht man nun den Aufbau vom Untergrund abzuziehen, so wird diese scheinbar homogene im Wesentlichen unsichtbare Zwischenschicht aufgrund der unterschiedlichen Haftungsbereiche definiert zerstört. Die Bruchstellen können nur schwer wieder exakt zusammengefügt werden, sodass eine Manipulation erkennbar ist.

Die unterschiedlichen Haftbereiche werden beispielsweise durch partielles Aufbringen einer Releaseschicht und/oder einer Haftschicht auf dem Trägersubstrat erzeugt. Die unterschiedlichen Haftbereiche weisen oft definierte Formen auf, z.B.: in Form von Mustern, Zeichen, Linien, Buchstaben geometrischen Figuren, Logos, Schriftzüge und dergleichen.

Bei genauerem Betrachten ist im Allgemeinen zwar erkennbar, dass die Zwischenschicht zerstört wurde, dass also eine Manipulation stattgefunden hat, bei sehr vorsichtigem und behutsamen Vorgehen ist jedoch die Zerstörung auf den ersten Blick oft nicht erkennbar.

Aus WO 01/71848 ist ein RFID-Label bekannt, das eine Spur aufweist, die mit den RFID-Komponenten verbunden ist. Bei Manipulation des Etiketts wird diese Spur beschädigt .Wird diese Spur zerstört oder unterbrochen, wird die Antenne funktionsunfähig oder ihre Eigenschaften verändert.

Aus WO 02/077939 ist ebenfalls ein RFID-Label bekannt, das eine Spur, die zum Nachweis von Manipulationen dient, aufweist. Diese Spur besteht aus Bereichen aus einem metallischen Leiter und Bereichen aus elektrisch leitfähiger Druckfarbe. Aus EP 1 959 377 A ist eine berührungslos auslesbare IC Karte bekannt, die zumindest eine magnetische Aufzeichnungsschicht, eine reflektierende Metallschicht und eine Hologrammschicht aufweist.

Aufgabe der Erfindung war es einen manipulationssicheren RFID-Antennenaufbau bereitzustellen, der keine zusätzliche, vollflächige oder partielle Trennlackschicht benötigt und der darüber hinaus ein weiteres Sicherheitsmerkmal aufweist.
Gegenstand der Erfindung ist daher ein manipulationssicherer RFID-Antennenaufbau gemäss Anspruch 1. Der erfindungsgemäße Antennenaufbau weist also keine herkömmliche Void-Schicht (Schicht mit zumindest bereichsweise unterschiedlicher Haftung) auf. Zusätzlich weist der Aufbau aber ein zusätzliches Sicherheitsmerkmal in Form eines optischen aktiven Merkmals, im Wesentlichen einer Beugungsstruktur, beispielsweise eines Hologramms auf, welches registergenau zur Antennenstruktur positioniert ist.

Als Trägersubstrat kommen beispielsweise flexible Kunststofffolien, beispielsweise aus PI, PP, MOPP, PE, PPS, PEEK, PEK, PEI, PSU, PAEK, LCP, PEN, PBT, PET, PA, PC, COC, POM, ABS, PVC in Frage.
Die Trägerfolien weisen vorzugsweise eine Dicke von 5 - 700 µm, bevorzugt 10 - 200 µm, besonders bevorzugt 30 - 70 µm auf.

Das Trägersubstrat kann bereits mit einer oder mehreren Schichten bedruckt sein.

Das Trägersubstrat wird in einem Beschichtungsverfahren wie beispielsweise einem Siebdruck-, Tiefdruck- oder Flexodruckverfahren mit einem strahlungshärtbaren Lack beschichtet. Die Beschichtung bildet eine Transferlackschicht.

Der strahlungshärtbare Lack kann beispielsweise ein strahlungshärtbares Lacksystem auf Basis eines Polyester-, eines Epoxy- oder Polyurethansystems das 2 oder mehr verschiedene, dem Fachmann geläufige Photoinitiatoren enthält, die bei unterschiedlichen Wellenlängen eine Härtung des Lacksystems in unterschiedlichem Ausmaß initiieren können. So kann beispielsweise ein Photoinitiator bei einer Wellenlänge von 200 bis 400 nm aktivierbar sein, der zweite Photoinitiator dann bei einer Wellenlänge von 370 bis 600 nm aktivierbar. Zwischen den Aktivierungswellenlängen der beiden Photoinitiatoren sollte genügend Differenz eingehalten werden, damit nicht eine zu starke Anregung des zweiten Photoinitiators erfolgt, während der erste Photoinitiator aktiviert wird. Der Bereich, in dem der zweite Photoinitiator angeregt wird, sollte im Transmissionswellenlängenbereich des verwendeten Trägersubstrats liegen. Für die Haupthärtung (Aktivierung des zweiten Photoinitiators) kann auch Elektronenstrahlung verwendet werden.

Als strahlungshärtbarer Lack kann auch ein wasserverdünnbarer Lack verwendet werden. Bevorzugt werden Lacksysteme auf Polyesterbasis.

Die Schichtdicke des aufgebrachten strahlungshärtbaren Lacks kann je nach Anforderung an das Endprodukt und Dicke des Substrats variieren und beträgt im Allgemeinen zwischen 0,5 und 50 µm, vorzugsweise zwischen 2 und 10 µm, besonders bevorzugt zwischen 2 und 5 µm.

Die Abformung der Oberflächenstruktur, also der Diffraktions-, Beugungs- oder Reliefstruktur, erfolgt beispielsweise bei kontrollierter Temperatur mittels einer Matrize oder unter Verwendung einer Prägeform in die strahlungshärtbare Lackschicht, die durch Aktivierung des ersten Photoinitiators bis zum Gelpunkt vorgehärtet wurde und zum Zeitpunkt der Abformung sich in diesem Stadium befindet.
Wird ein wasserverdünnbarer strahlungshärtbarer Lack verwendet, kann gegebenenfalls eine Vortrocknung vorgeschaltet werden, beispielsweise durch IR-Strahler.

Die Prägeform kann transparent sein, sie kann ein geschweißter, geklebter, gelöteter oder nahtloser Metallsleeve oder Kunststoffsleeve sein. Bevorzugt werden Nickelsleeves verwendet. Um eine genaue Prägung der Oberflächenstruktur zu erhalten, ist es zweckmäßig das Prägewerkzeug auf einem temperaturkontrollierten pneumatischen und strömungsgekühlten oder beheizten Spannzylinder zu montieren.

Dabei wird das Trägersubstrat in Kontakt mit dem temperaturgesteuerten Spannzylinder gebracht, die Prägung der Oberflächenstruktur erfolgt vorzugsweise nur dann, wenn das mit dem strahlungshärtbaren Lack beschichtete Trägersubstrat sich in Kontakt mit dem Zylinder befindet.
Dabei erfolgt eine genaue Kontrolle der Verfahrensparameter, wie Druck und insbesondere Temperatur, um eine zu rasche oder zu langsame Zustandsveränderung der Lackschicht zu vermeiden.
Dabei erfolgt die Aushärtung des UV-Lacks und anschließend eine Nachhärtung.

Auf die Prägestruktur wird anschließend eine partielle metallische Beschichtung aufgebracht, die die Spiegelschicht für das Hologramm bildet.
Diese metallische Schicht kann bereits die Antenne bilden.
Wird im Folgenden eine getrennte Antenne aufgebracht, entspricht die Form der Spiegelschicht der Form entweder der später aufgebrachten Antenne, genau der inversen Form der Antenne, liegt vollflächig über dem gesamten Label oder weist eine eigene, von der Antenne verschiedene Form auf.

Als partielle metallische Beschichtung kommen beispielsweise Cr, AI, Ag, Ti, Cu, Pd, Pt, Au und dergleichen in Frage. Vorzugsweise besteht diese Beschichtung aus demselben Metall wie die anschließend aufzubringende Antenne.
Die Dicke der partiellen Metallschicht beträgt 5 nm - 50 µm, vorzugsweise 20 - 100 nm als Spiegelschicht und 0,5 - 50 µm als Antenne.

Die partielle Aufbringung kann durch selektive Metallisierung, beispielsweise mittels einer Maske oder durch vollflächige Metallisierung mit anschließendem Ätzverfahren oder anschließender Demetallisierung erfolgen.
Ein derartiges Demetallisierungsverfahren ist beispielsweise aus EP 1 291 463 oder aus EP 1 332 238 bekannt.

Zur Glättung der geprägten Oberfläche ist anschließend gegebenenfalls eine Glättungslackschicht vollflächig oder partiell zumindest in den geprägten Bereichen aufgebracht.
Die Glättungslackschicht besteht aus einem Lacksystem, das die Temperaturen, die im anschließenden Metallisierungsschritt erreicht werden, unbeschadet übersteht.
Die Glättungslackschicht ist insbesondere vorteilhaft um die maximale Leitfähigkeit einer anschließend vorzugsweise registergenau zum Metallspiegel aufgebrachten Antenne zu erreichen. Ohne Glättungslackschicht kann bei dünnen Metallschichten die metallische Antennenschicht der Topographie der geprägten Oberfläche folgen, wodurch der effektive Leitungsquerschnitt in manchen Bereichen reduziert wird, und somit die Leitfähigkeit im Vergleich zu einer mit derselben Menge Metall bedampften, glatten Folie geringer ist.

Die Glättungslackschicht wird in einem Beschichtungsverfahren wie beispielsweise einem Siebdruck-, Tiefdruck- oder Flexodruck-, Inkjet-, oder Offsetverfahren, im Walzenauftragsverfahren, durch Streichen, Sprühen, Curtain Coating oder dergleichen aufgebracht.

Auf diese Glättungslackschicht wird anschließend die Antennenstruktur aufgebracht. Diese partielle metallische Schicht besteht beispielsweise aus Cr, Al, Ag, Ti, Cu, Pd, Pt, Au und dergleichen, vorzugsweise jedoch aus Kupfer und wird registergenau zur partiellen Metallschicht, die den Spiegel für das Hologramm bildet, aufgebracht.

Die partielle Aufbringung kann durch selektive Metallisierung, beispielsweise mittels einer Maske oder durch vollflächige Metallisierung mit anschließendem Ätzverfahren oder anschließender Demetallisierung erfolgen.

Die Dicke der die Antenne bildenden metallischen Beschichtung beträgt vorzugsweise 0,5 bis 50 µm.
Gegebenenfalls kann diese Schicht auch noch galvanisch nachverstärkt werden. Ein derartiges Verfahren ist in EP 1 332 238 beschrieben.

In einer weiteren Ausführungsform wird die Antenne durch Verdrucken eines leitfähigen Lacks, wie z.B. einer Silberleitpaste, hergestellt. Mögliche Beschichtungsmethoden beinhalten beispielsweise Sieb-, Tief-, Flexo-, Inkjet-, oder Offsetdruck.

Ferner kann auf das Trägersubstrat ein Strap oder Chip aufgebracht werden. Auf diesem können Daten gespeichert und ausgelesen werden.
Der Chip kann beispielsweise ein herkömmlicher RFID-Chip oder eine auf Si-Basis gedruckte Struktur oder ein polymerer Mikroschaltkreis sein. Ferner kann anstelle eines Chips und der Antenne auch ein RLC-Schwingkreis aufgebracht werden.

Als Klebeschichten kommen beispielsweise Selbstklebeschichten oder thermisch bzw. durch Druck aktivierbare Klebeschichten in Frage.
Das Sicherheitsmerkmal kann nun mittels dieser Klebeschicht auf ein beliebiges Substrat, beispielsweise Gewebe, Glas, Kunststoffe, Metall, Papier, Vliese und dergleichen appliziert werden.

Vorzugsweise wird die Klebeschicht, durch eine abziehbare Abdeckfolie bzw. einen Releaseliner abgedeckt, der leicht abziehbar ist.

In der beschriebenen Ausführungsform ist die geprägte Struktur (das Hologramm) von der Seite des Trägersubstrats her sichtbar.

In einer alternativen Ausführungsform kann die geprägte Struktur von der Klebebeschichtungsseite her sichtbar sein, sodass sie durch einen transparenten Träger, wie z.B. eine Glasscheibe, betrachtet werden kann.

Dazu wird der die Antenne tragende Aufbau (Trägersubstrat, geprägte UV-Lackschicht, Spiegelschicht, Glättungslack, Antenne) gegen ein mit einer glatten, nicht geprägten UV-Lackschicht versehenes Trägersubstrat kaschiert werden. Dabei wird der Release, also die Kraft, die zum Abziehen der Trägerfolie benötigt wird, der ungeprägten UV-Lackschicht so eingestellt, dass er größer ist als der Release der geprägten UV-Lackschicht.
Das Trägersubstrat wird dann von der geprägten UV-Lackschicht abgezogen, der Strap bzw. Chip auf die geprägte UV-Lackschicht aufgebracht und anschließend mit einer Selbstklebbeschichtung versehen. Die Kopplung zwischen Strap bzw. Chip und Antenne erfolgt in dieser Ausführungsform kapazitiv bzw. induktiv, da kein direkter elektrischer Kontakt zwischen Chip und der Antenne vorhanden ist.

Ist ein elektrischer Kontakt zwischen Strap bzw. Chip und Antenne erforderlich, kann in einer weiteren Ausführungsform auf den die Antenne tragenden Aufbau mittels eines leitfähigen Klebers ein Strap bzw. Chip aufgebracht werden (direkte elektrische Kontaktierung), und der Aufbau anschließend gegen ein mit einer glatten, nicht geprägten UV-Lackschicht versehenes Trägersubstrat kaschiert und nach Abziehen des Trägersubstrats von der geprägten Lackschicht diese mit einer Selbstklebebeschichtung versehen werden. Dabei wird der Release, also die Kraft, die zum Abziehen der Trägerfolie benötigt wird, der ungeprägten UV-Lackschicht so eingestellt, dass er größer ist als der Release der geprägten UV-Lackschicht.

Wird versucht, das Label nach dem Aufbringen auf einen Träger oder Gegenstand wieder abzuziehen, wie z.B. im Fall einer Manipulation, so wird nur das Trägersubstrat abgezogen, der übrige Schichtaufbau inklusive der dünnen UV-Lackschicht verbleibt auf dem Träger.

Aufgrund der geringen Dicke des auf dem Träger verbleibenden Schichtaufbaus im Vergleich zur Klebeschicht kann dieser nicht mehr zerstörungsfrei entfernt werden, sodass eine Manipulation nicht möglich ist (z.B. Transferieren auf anderes Substrat), ohne die Transponderfunktion des Labels zu verändern bzw. zu zerstören.

Das Trägersubstrat kann darüber hinaus mit bedruckt sein.

Die erfindungsgemäßen RFID- Antennen können beispielsweise zur Sicherung von Gegenständen, für Mautsysteme und dergleichen verwendet werden.

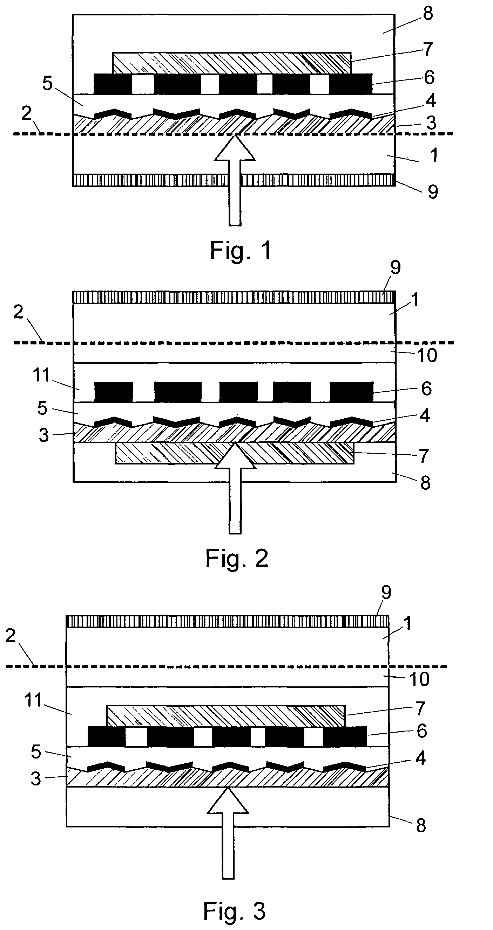

In den Figuren 1 bis 3 sind erfindungsgemäße Ausführungsformen der Antenne dargestellt.

### Darin bedeuten

1 das Trägersubstrat
2 die Releaselinie, an der der Aufbau beim Versuch, das Label vom Träger zu lösen, getrennt wird
3 die geprägte Lackschicht
4 die Spiegelschicht
5 eine Glättungslackschicht
6 die Antenne
7 einen Strap oder Chip
8 eine Selbstklebebeschichtung
9 eine optionale gedruckte Schicht
10 eine glatte UV-Lackschicht
11 eine Kaschierklebeschicht.

In Fig. 1 ist eine Ausführungsform dargestellt, bei der die geprägte Struktur von der Trägersubstratseite her sichtbar ist und eine kapazitive bzw. induktive Kopplung zwischen Strap oder Chip und Antenne vorliegt
In Fig. 2 ist eine Ausführungsform dargestellt, in der das Hologramm von der Seite der Klebebeschichtung sichtbar ist und eine kapazitive bzw. induktive Kopplung zwischen Strap oder Chip und Antenne vorliegt.
In Fig . 3 ist eine Ausführungsform dargestellt, in der das Hologramm von der Seite der Klebebeschichtung sichtbar ist und ein direkter elektrischer Kontakt zwischen Strap oder Chip und Antenne vorliegt. Die direkte Kontaktierung kann beispielsweise mit Hilfe eines leitfähigen Klebers erfolgen. Die Kaschierung erfolgt nach der Aufbringung des Straps bzw. Chips

## Patentansprüche

1. Folienmaterial als manipulationssicherer Transponder-Antennenaufbau aufweisend ein Trägersubstrat, eine Transponder-Antenne, gegebenenfalls einen Chip, und eine Klebebeschichtung, **dadurch gekennzeichnet, dass** der Aufbau auf einem Trägersubstrat (1) folgende Schichten aufweist:
a) eine dünne UV-härtende Lackschicht in die ein Hologramm geprägt ist (3),
b) partielle Metallisierung als Spiegelschicht (4),
c) eine Glättungslackschicht (5),
d) eine partielle Kupferschicht, die die Antenne bildet (6),
e) einen Strap oder Microchip (7), der in direktem Kontakt mit der Antenne steht oder auf der der Schicht b) (4) gegenüberliegenden Seite der Schicht a) (3) aufgebracht ist,
f) eine Klebebeschichtung (8).

2. Folienmaterial nach Anspruch 1, **dadurch gekennzeichnet, dass** der Aufbau weiters eine abziehbare Abdeckfolie und/oder eine Druckschicht (9) und/oder eine nicht geprägte UV-Lackschicht (10) und/oder eine Kaschierkleberschicht (11) aufweist.

3. Folienmaterial als manipulationssicherer Transponder-Antennenaufbau nach Anspruch 1 oder 2, **dadurch gekennzeichnet, dass** die Schicht a) eine Dicke von 0,5 bis 50 µm aufweist.

4. Folienmaterial als manipulationssicherer RFID-Antennenaufbau nach einem der Ansprüche 1 bis 3, **dadurch gekennzeichnet, dass** die Dicke der metallischen Spiegelschicht b) 20 - 100 nm beträgt.

5. Folienmaterial als manipulationssicherer RFID-Antennenaufbau nach einem der Ansprüche 1 bis 3, **dadurch gekennzeichnet, dass** die Dicke der Antennenschicht d) 0,5 bis 50 µm beträgt.

6. Folienmaterial als manipulationssicherer RFID-Antennenaufbau nach einem der Ansprüche 1 bis 5, **dadurch gekennzeichnet, dass** die Antennenschicht d) galvanisch nachverstärkt ist.

7. Folienmaterial als manipulationssicherer RFID-Antennenaufbau nach einem der Ansprüche 1 bis 6, **dadurch gekennzeichnet, dass** die Schichten b) und d) voneinander unabhängig aus Cr, Al, Ag, Ti, Cu, Pd, Pt, Au bestehen.

8. Folienmaterial als manipulationssicherer RFID-Antennenaufbau nach einem der Ansprüche 1 bis 7, **dadurch gekennzeichnet, dass** die Schichten b) und d) aus demselben Metall bestehen.

9. Folienmaterial als manipulationssicherer RFID-Antennenaufbau nach einem der Ansprüche 1 bis 8, **dadurch gekennzeichnet, dass** die Schicht b) die Antenne bildet

10. Folienmaterial als manipulationssicherer RFID-Antennenaufbau nach einem der Ansprüche 1 bis 9, **dadurch gekennzeichnet, dass** die Schichten b) und d) unterschiedlich strukturiert sind.

11. Etiketten, Streifen oder Patches umfassend ein Folienmaterial gemäß den Ansprüchen 1 bis 10.

## Claims

1. Film material as a manipulation-proof transponder antenna configuration, having a carrier substrate, a transponder antenna, optionally a chip, and an adhesive coating, **characterized in that** the configuration has, on a carrier substrate (1), the following layers:
a) a thin, UV-curing lacquer layer (3), embossed in which is a hologram,
b) partial metallization as a mirror layer (4),
c) a smoothing lacquer layer (5),
d) a partial copper layer which forms the antenna (6),
e) a strap or microchip (7) which is in direct contact with the antenna or applied to the side of layer a) (3) which is opposite layer b) (4),
f) an adhesive coating (8).

2. Film material according to Claim 1, **characterized in that** the configuration furthermore has a removable cover film and/or a print layer (9) and/or a non-embossed UV lacquer layer (10) and/or a lamination adhesive layer (11).

3. Film material as manipulation-proof transponder antenna configuration according to Claim 1 or 2, **characterized in that** the thickness of layer a) ranges from 0.5 to 50 µm.

4. Film material as manipulation-proof RFID antenna configuration according to one of Claims 1 to 3, **characterized in that** the thickness of the metallic mirror layer b) ranges from 20 - 100 nm.

5. Film material as manipulation-proof RFID antenna configuration according to one of Claims 1 to 3, **characterized in that** the thickness of the antenna layer d) ranges from 0.5 to 50 µm.

6. Film material as manipulation-proof RFID antenna configuration according to one of Claims 1 to 5, **characterized in that** the antenna layer d) is galvanically reinforced.

7. Film material as manipulation-proof RFID antenna configuration according to one of Claims 1 to 6, **characterized in that** the layers b) and d) independently of one another consist of Cr, Al, Ag, Ti, Cu, Pd, Pt, Au.

8. Film material as manipulation-proof RFID antenna configuration according to one of Claims 1 to 7, **characterized in that** the layers b) and d) consist of the same metal.

9. Film material as manipulation-proof RFID antenna configuration according t.o one of Claims 1 to 8, **characterized in that** the layer b) forms the antenna.

10. Film material as manipulation-proof RFID antenna configuration according to one of Claims 1 to 9, **characterized in that** the layers b) and d) are structured differently.

11. Tags, strips or patches comprising a film material according to Claims 1 to 10.

## Revendications

1. Matériau en feuille en tant que structure d'antenne de transpondeur protégée contre toute manipulation, présentant un substrat de support, une antenne de transpondeur, éventuellement une puce, et un revêtement adhésif, **caractérisé en ce que** la structure présente sur un substrat de support (1) des couches qui suivent :
a) une couche de vernis fine durcissant sous l'action des UV, dans laquelle est estampé un hologramme (3) ;
b) une métallisation partielle en tant que couche réfléchissante (4),
c) une couche de vernis de lissage (5),
d) une couche de cuivre partielle, qui forme l'antenne (6),
e) un dispositif de couplage ou une micropuce (7), qui se trouve en contact direct avec l'antenne ou qui est appliqué(e) sur le côté, faisant face à la couche b) (4), de la couche a) (3),
f) un revêtement adhésif (8).

2. Matériau en feuille selon la revendication 1, **caractérisé en ce que** la structure présente par ailleurs une feuille de recouvrement pouvant être retirée et/ou une couche d'impression (9) et/ou une couche de vernis UV (10) non estampée et/ou une couche adhésive de doublage (11).

3. Matériau en feuille en tant que structure d'antenne de transpondeur protégée contre toute manipulation selon la revendication 1 ou 2, **caractérisé en ce que** la couche a) présente une épaisseur allant de 0,5 à 50 *µ*m.

4. Matériau en feuille en tant que structure d'antenne RFID protégée contre toute manipulation selon l'une quelconque des revendications 1 à 3, **caractérisé en ce que** l'épaisseur de la couche réfléchissante métallique b) présente une valeur de 20 - 100 nm.

5. Matériau en feuille en tant que structure d'antenne RFID protégée contre toute manipulation selon l'une quelconque des revendications 1 à 3, **caractérisé en ce que** l'épaisseur de la couche d'antenne d) présente une valeur allant de 0,5 à 50 *µ*m.

6. Matériau en feuille en tant que structure d'antenne RFID protégée contre toute manipulation selon l'une quelconque des revendications 1 à 5, **caractérisé en ce que** la couche d'antenne (d) est renforcée ultérieurement par voie galvanique.

7. Matériau en feuille en tant que structure d'antenne RFID protégée contre toute manipulation selon l'une quelconque des revendications 1 à 6, **caractérisé en ce que** les couches b) et d) sont constituées indépendamment l'une de l'autre de Cr, Al, Ag, Ti, Cu, Pd, Pt, Au.

8. Matériau en feuille en tant que structure d'antenne RFID protégée contre toute manipulation selon l'une quelconque des revendications 1 à 7, **caractérisé en ce que** les couches b) et d) sont constituées du même métal.

9. Matériau en feuille en tant que structure d'antenne RFID protégée contre toute manipulation selon l'une quelconque des revendications 1 à 8, **caractérisé en ce que** la couche b) forme l'antenne.

10. Matériau en feuille en tant que structure d'antenne RFID protégée contre toute manipulation selon l'une quelconque des revendications 1 à 9, **caractérisé en ce que** les couches b) et d) sont structurées différemment.

11. Etiquettes, bandes ou patchs comprenant un matériau en feuille selon les revendications 1 à 10.
